# EUROPEAN PATENT APPLICATION

(11) **EP 4 092 610 A1**
(43) Date of publication of application: **23.11.2022**
(21) Application number: 20913725.6
(22) Date of filing: 31.12.2020
(51) Int. Cl.: G06Q 50/28

(54) **INFORMATION PROCESSING METHOD, DEVICE, SYSTEM, AND COMPUTER-READABLE STORAGE MEDIUM**

(30) Priority: 14.01.2020 CN 202010037294
(71) Applicant: Beijing Jingdong Zhenshi Information Technology Co., Ltd., Beijing, Beijing 100086 (CN)
(72) Inventor: YANG, Pan, Beijing 100086 (CN)
(74) Representative: Roberts, David
(86) International application number: PCT/CN2020/141878
(87) International publication number: WO 2021/143535

(57) **Abstract**

The present disclosure discloses an information processing method, device, system and computer-readable storage medium, and relates to the field of information technology. The information processing method includes: determining a second user associated with a first user from users corresponding to distribution tasks of a distributor, wherein a state of goods of the second user is Shipped; generating reconsignment information to be provided to the first user, wherein the reconsignment information comprises information of the first user and goods information of the second user; generating distribution task information to be provided to the first user in response to the first user acquiring the reconsignment information and sending a confirmation of the reconsignment information; and changing the state of goods of the second user in the distribution task of the distributor to Delivered after acquiring a confirmation of completion of reconsignment sent by the second user.

## Description

### CROSS-REFERENCE TO RELATED APPLICATIONS

The present disclosure is based on and claims priority of Chinese application for invention No. 202010037294.0, filed on Jan. 14, 2020, the disclosure of which is hereby incorporated into this disclosure by reference in its entirety.

### TECHNICAL FIELD

The present disclosure relates to the field of information technology, and more particularly to an information processing method, device, system, and computer-readable storage medium.

### BACKGROUND

In the relevant goods distribution technique, a distributor has contact information or a contact address of each user to whom goods are distributed, and communication needs to be initiated to each of these users for distribution. The distributor needs to contact a user again to complete the distribution process if the user is currently unable to receive goods.

### SUMMARY

According to a first aspect of some embodiments of the present disclosure, an information processing method is provided, comprising: determining a second user associated with a first user from users corresponding to distribution tasks of a distributor, wherein a state of goods of the second user is Shipped; generating reconsignment information to be provided to the first user, wherein the reconsignment information comprises information of the first user and goods information of the second user; generating distribution task information to be provided to the first user in response to the first user acquiring the reconsignment information and sending a confirmation of the reconsignment information; and changing the state of goods of the second user in the distribution task of the distributor to Delivered after acquiring a confirmation of completion of reconsignment sent by the second user.

In some embodiments, the determining a second user associated with a first user comprises: determining a receiving user within a preset neighborhood range of the first user as the second user according to an address of the first user and addresses of other users receiving goods to be delivered by the distributor.

In some embodiments, the determining a second user associated with a first user comprises: obtaining a graph with users in a set of historical reconsignment users as nodes, wherein there is an edge between two users in the set of historical reconsignment users in case that there is a historical reconsignment event occurred between the two users, and a weight is determined for the edge according to attributes of goods corresponding to the historical reconsignment event; obtaining, from the graph, weights between the first user and various receiving users of goods to be delivered by the distributor; and determining a receiving user, of which weight with the first user is less than a preset value as the second user.

In some embodiments, the attributes of goods comprise at least one of volume, weight, or value of goods.

In some embodiments, the information processing method further comprises: updating a weight of an edge between the first user and the second user in the graph after acquiring the confirmation of the completion of reconsignment sent by the second user.

In some embodiments, the graph is stored in a graph database.

In some embodiments, the information processing method further comprises: storing the distribution task information of the first user and the confirmation of the completion of reconsignment in a blockchain.

In some embodiments, the information processing method further comprises: sending an identifier corresponding to the reconsignment information of the first user to a terminal of the distributor; and receiving a confirmation of the reconsignment information of the first user sent by a terminal of the first user in the case that the first user acquires the identifier corresponding to the reconsignment information of the first user using the terminal of the first user.

In some embodiments, the information processing method further comprises: sending an identifier corresponding to the distribution task information of the first user to a terminal of the first user; and receiving the confirmation of the completion of reconsignment sent by a terminal of the second user after the identifier corresponding to the distribution task information is acquired by the terminal of the second user.

According to a second aspect of some embodiments of the present disclosure, there is provided an information processing device, comprising: an associated user determination module configured to determine a second user associated with a first user from users corresponding to distribution tasks of a distributor, wherein a state of goods of the second user is Shipped; a reconsignment information generation module configured to generate reconsignment information to be provided to the first user, wherein the reconsignment information comprises information of the first user and goods information of the second user; a distribution information generation module configured to generate distribution task information to be provided to the first user in response to the first user acquiring the reconsignment information and sending a confirmation of the reconsignment information; and a state changing module configured to change the state of goods of the second user in the distribution task of the distributor to Delivered after acquiring a confirmation of completion of reconsignment sent by the second user.

According to a third aspect of some embodiments of the present disclosure, there is provided an information processing device, comprising: a memory; a processor coupled to the memory, the processor configured to, based on instructions stored in the memory, carry out any one of the foregoing information processing methods.

According to a fourth aspect of some embodiments of the present disclosure, there is provided a non-transitory computer-readable storage medium on which a computer program is stored, wherein the program when executed by a processor carries out any one of the foregoing information processing methods.

Some embodiments of the present invention have the following advantages or beneficial effects. After determining a second user associated with a first user to whom goods are delivered, information flowing from the distributor to the first user and then to the second user is generated, so that the first user can deliver goods of the second user on behave of the distributor. Thus, distribution information flows in parallel, and distribution efficiency can be improved. In addition, the distributor does not need to contact the receiving users one by one. Thereby, the number of repeated deliveries can be reduced, and the costs of communication, transportation and human resources can be saved.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
Fig. 1 shows a flowchart of an information processing method according to some embodiments of the present disclosure;
Fig. 2A shows a flowchart of a second user determination method according to some embodiments of the present disclosure;
Fig. 2B shows a flowchart of a second user determination method according to other embodiments of the present disclosure;
Fig. 3 shows a flowchart of an information processing method according to other embodiments of the present disclosure;
Fig. 4 shows a structural diagram of an information processing device according to some embodiments of the present disclosure;
Fig. 5 shows a structural diagram of an information processing device according to other embodiments of the present disclosure;
Fig. 6 shows a structural diagram of an information processing device according to still other embodiments of the present disclosure;
Fig. 7 shows a structural diagram of an information processing device according to still other embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

After analysis, the inventor found that in the related art, the distributor directly contacts each receiving user, so that the information flow is from the distributor to each user. In addition, the distributor needs to process the distribution tasks one by one in series, and there is also the possibility of repeated execution of a distribution task. Therefore, information also flows in series. This leads to a tedious communication process and low distribution efficiency in the distribution process.

One technical problem to be solved by the embodiments of the present disclosure is: how to optimize the information flow in the distribution process to improve distribution efficiency.

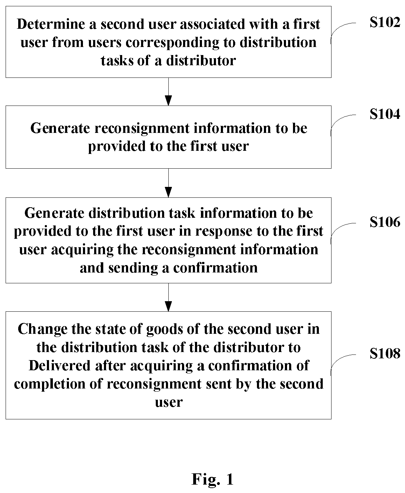

After analysis, the inventor found that a distributor was usually responsible for goods to be collectively delivered to one or several residential compounds or office buildings that are close to each other. Therefore, it is desired to divide the single information flow from the distributor to the receiving users into multiple information flows from the distributor to a user, and from the user to other user, so as to change the serial distribution tasks into parallel distribution tasks to improve distribution efficiency. An embodiment of an information processing method of the present disclosure will be described below with reference to Fig. 1.

Fig. 1 shows a flowchart of an information processing method according to some embodiments of the present disclosure. As shown in Fig. 1, the information processing method of this embodiment comprises steps S102 to S108.

In step S102, a second user associated with a first user is determined from users corresponding to distribution tasks of a distributor, wherein the second user is a user receiving goods to be distributed, and the state of goods of the second user is Shipped (to be received). The number of second users is, for example, one or more.

In some embodiments, after the distributor contacts the first user, the process of determining a second user associated with the first user is triggered. For example, the distributor initiates a call to the first user through a distribution client; the distributor completes the process of delivering goods to the first user, so that the state of the order or distribution note corresponding to the first user in a distribution list of the distributor is changed to Completed. Alternatively, the distributor can manually trigger the process of recommending a second user associated with the first user in the client.

The second user is, for example, a user close to the first user, or the first user is a user who has previously transferred goods for the second user, for example. Thus, the first user is more likely to accept a reconsignment task.

In step S104, reconsignment information to be provided to the first user is generated, wherein the reconsignment information comprises information of the first user and goods information of the second user. The goods information is, for example, information of an order or a distribution note in which the goods are listed.

In some embodiments, the reconsignment information is sent directly to a terminal of the first user; alternatively, the reconsignment information is sent to a terminal of the distributor and presented by the distributor to the first user.

In step S106, distribution task information to be provided to the first user is generated in response to the first user acquiring the reconsignment information and sending a confirmation of the reconsignment information.

In some embodiments, the reconsignment information is presented in the form of an identifier such as a QR (Quick Response) code, bar code, or verification code. Taking a QR code as an example, a QR code corresponding to the reconsignment information of the first user is sent to the terminal of the distributor, so that the QR code can be displayed on the terminal of the distributor. If the first user is willing to deliver goods for the second user on behave of the distributor, the first user scans the QR code corresponding to the reconsignment information of the first user using his/her terminal to confirm the reconsignment information. Then, the first user's terminal sends a confirmation, for example, to a server.

In some embodiments, the distribution task information is presented in the form of an identifier such as a QR code, bar code, or verification code. Take a QR code as an example, a QR code corresponding to the distribution task information of the first user is sent to the terminal of the first user. The second user scan the QR code corresponding to the distribution task information displayed on the terminal of the first user with his/her terminal, so as to trigger the second user's terminal to transmit a confirmation of the completion of reconsignment. This confirmation is sent to a server, for example.

In step S108, the state of goods of the second user in the distribution task of the distributor is changed to Delivered after acquiring a confirmation of completion of reconsignment sent by the second user. In addition, the distribution task of the first user can also be changed to Delivered.

In the method of the above embodiment, after determining a second user associated with a first user to whom goods are delivered, information flowing from the distributor to the first user and then to the second user is generated, so that the first user can deliver goods of the second user on behave of the distributor. Thus, distribution information flows in parallel, and distribution efficiency can be improved. In addition, the distributor does not need to contact the receiving users one by one. Thereby, the number of repeated deliveries can be reduced, and the costs of communication, transportation and human resources can be saved.

Two methods of determining an associated user will be illustrated below.

In some embodiments, a receiving user within a preset neighborhood range of the first user is determined as the second user according to the address of the first user and the addresses of other users receiving goods to be distributed by the distributor.

For example, according to the distribution addresses of the users in orders and other information, a close user is determined by means of a geographic information system (GIS).

Thus, the distributor is provided with a distribution strategy that entrusts the first user to deliver goods to another user in the vicinity of his geographic location.

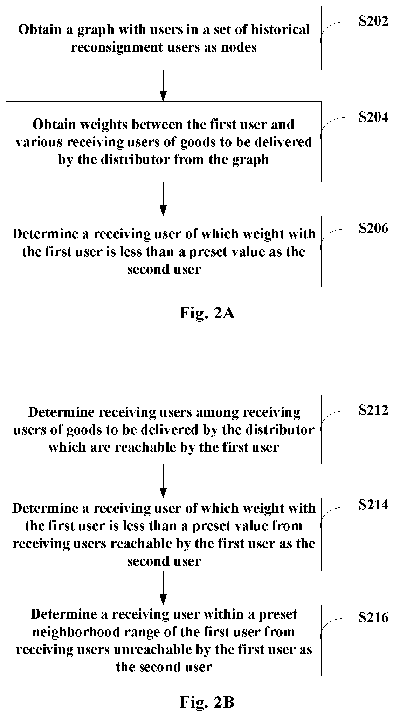

In some embodiments, the relationship between users is established based on a graph, and then the second user is determined according to the graph. An embodiment of a method for determining the second user will be described below with reference to Fig. 2A.

Fig. 2A shows a flowchart of a second user determination method according to some embodiments of the present disclosure. As shown in Fig. 2A, the second user determination method of this embodiment comprises steps S202 to S206.

In step S202, a graph with users in a set of historical reconsignment users as nodes is obtained, wherein there is an edge between two users in the set of historical reconsignment users in case that there is a historical reconsignment event occurred between the two users, and a weight of the edge is determined according to attributes of goods corresponding to the historical reconsignment event. The set of historical reconsignment users is a set determined according to users involved in historical reconsignment events.

In step S204, weights between the first user and various users receiving goods to be delivered by the distributor are obtained from the graph.

In step S206, a receiving user of which weight with the first user is less than a preset value is determined as the second user.

For example, if user A once delivered goods to user B on behave of a distributor, there is an edge between user A and user B in the graph. If the edges in the graph are undirected, there is an undirected edge between two nodes as long as a reconsignment event occurred between two users corresponding to the two node; if the edges in the graph are all directed, in the case that user A has delivered goods of user B, but user B has not delivered goods of user A, there are only a directed edge from user A to user B, without a directed edge from user B to user A. Through recording user relationships using undirected edges, a smaller amount of data and higher calculation efficiency can be achieved. Through recording user relationships using directed edges, the information is more accurate, and more accurate recommendation results can be achieved. Those skilled in the art can select a specific implementation manner according to the computing capability and accuracy requirements of the device.

In some embodiments, the attributes of goods comprise at least one of volume, weight or value of goods, and the weights of edges is negatively correlated with these attributes. For example, weights between users can be assigned for different types of attributes, and a sum of weighted values of different attributes is used as the weight of an edge. The volume and weight of goods can reflect a probability that users will accept reconsignment again, that is, users who once delivered heavier and larger goods are more likely to be willing to accept reconsignment; the value of goods reflects the reliability of the user, that is, users who once delivered high-value goods are more trustworthy.

In some embodiments, if multiple reconsignment events occur between two users, a weight can be determined corresponding to each distribution according to the attributes of goods in each distribution process, and an average value of the weights corresponding to the multiple deliveries can be used as a weight of the edge between the two users.

In some embodiments, the graph is stored in a graph database. The graph database is a type of NoSQL database, which applies the graph theory to store relational information between entities, and is a non-relational database.

By the utilization of a graph, it is possible to dig deeper into potential relationships between users. For example, in the graph, user A is reachable to user B (for example, there is an undirected edge between user A and user B, or there is a unidirectional edge between user A and user B), and user B is reachable to user C. User A is reachable to user C even if there is no edge between user A and user C. If the sum of the weights of edge AB and edge BC, that is, the weight between user A and user C, is less than a preset value, user C can be recommended as the second user when user A is the first user.

In some embodiments, after acquiring a confirmation of the completion of reconsignment sent by the second user, the weight of the edge between the first user and the second user is updated in the graph. Thus, the accuracy of the graph is improved.

The location-based recommendation method can be used in cooperation with the graph-based recommendation method. An embodiment of a method for determining the second user will be described below with reference to Fig. 2B.

Fig. 2B shows a flowchart of a second user determination method according to some embodiments of the present disclosure. As shown in Fig. 2B, the second user determination method of this embodiment comprises steps S212 to S216.

In step S212, receiving users among receiving users of goods to be delivered by the distributor which are reachable by the first user are determined according to the graph.

In step S214, a receiving user of which weight with the first user is less than a preset value is determined from receiving users reachable by the first user as the second user.

In step S216, a receiving user within a preset neighborhood range of the first user is determined from receiving users unreachable by the first user as the second user.

Thus, for a user who has a direct or indirect historical reconsignment relationship with the first user, whether the user is the second user can be determined according to the historical reconsignment information; for a user who does not have a direct or indirect historical reconsignment relationship with the first user, whether the user is the second user can be determined according to the user' s geographic location.

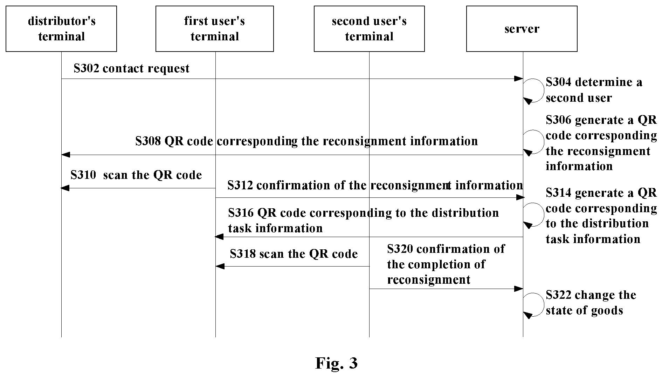

A device interaction process of the information processing method of the present disclosure will be described below with reference to Fig. 3.

Fig. 3 shows a flowchart of an information processing method according to other embodiments of the present disclosure. As shown in Fig. 3, the information processing method of this embodiment includes steps S302 to S322.

In step S302, a server obtains a request for contacting a first user sent by a distributor's terminal.

For example, the server receives a contact request initiated by the distributor through a client and initiates a call to the first user.

In step S304, the server reads a distribution task list of the distributor and determines a second receiving user associated with the first user.

In step S306, the server generates QR code corresponding to reconsignment information of the first user, wherein the reconsignment information comprises information of the first user and goods information of the second user.

In step S308, the server sends the QR code corresponding to the reconsignment information of the first user to the distributor's terminal.

In step S310, the distributor shows the QR code to the first user. The goods information and address of the second user can be also showed, which can be reviewed by the first user to decide whether to agree to the reconsignment. If agreed, the first user scans the QR code with his/her terminal to confirm the reconsignment.

In step S312, a communication process in which the terminal (e.g., a client on the terminal) sends a confirmation of the reconsignment information to the server is triggered after the first user scans the QR code using his/her terminal, and the server receives the confirmation of the reconsignment information sent by the first user.

In step S314, the server generates a distribution task for the first user and a QR code corresponding to the distribution task information, and adds the task to a distribution task list of the first user.

In step S316, the server sends the QR code corresponding to the distribution task information of the first user to the first user's terminal.

In step S318, the first user delivers the goods of the second user to the second user. The second user scan the QR code corresponding to the distribution task information presented by the first user using his/her terminal to trigger a confirmation of the completion of reconsignment after the second user receives the goods.

In step S320, the server receives the confirmation of the completion of reconsignment sent by the second user's terminal.

In step S322, the server changes the state of goods of the second user in distribution task list of each of the distributor and the first user to Delivered.

The above embodiment establishes information flows between the distributor and multiple users, and can achieve an efficient distribution process.

Key information can be stored on a blockchain to further improve the reliability of distribution. In some embodiments, the distribution task information of the first user and the confirmation of the completion of reconsignment are stored on a blockchain. The identification of each record in a block is, for example, order number, distribution order number, and so on.

Therefore, the information on the assignment and completion of the reconsignment task is traceable and cannot be tampered with, which improves the reliability of distribution.

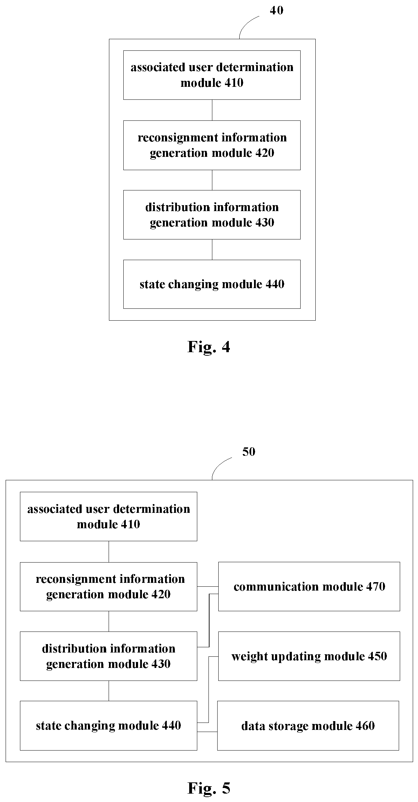

An embodiment of an information processing device of the present disclosure will be described below with reference to Fig. 4.

Fig. 4 shows a structural diagram of an information processing device according to some embodiments of the present disclosure. As shown in Fig. 4, the information processing device 40 of this embodiment comprises: an associated user determination module 410 for determining a second user associated with a first user from users corresponding to distribution tasks of a distributor, wherein a state of goods of the second user is Shipped; a reconsignment information generation module 420 for generating reconsignment information to be provided to the first user, wherein the reconsignment information comprises information of the first user and goods information of the second user; a distribution information generation module 430 for generating distribution task information to be provided to the first user in response to the first user acquiring the reconsignment information and sending a confirmation of the reconsignment information; a state changing module 440 for changing the state of goods of the second user in the distribution task of the distributor to Delivered after acquiring a confirmation of completion of reconsignment sent by the second user.

In some embodiments, the associated user determination module 410 is further configured to determine a receiving user within a preset neighborhood range of the first user as the second user according to an address of the first user and addresses of other users receiving goods to be delivered by the distributor.

In some embodiments, the associated user determination module 410 is further configured to obtain a graph with users in a set of historical reconsignment users as nodes, wherein there is an edge between two users in the set of historical reconsignment users in case that there is a historical reconsignment event occurred between the two users, and a weight is determined for the edge according to attributes of goods corresponding to the historical reconsignment event; obtain, from the graph, weights between the first user and various receiving users of goods to be delivered by the distributor; and determine a receiving user, of which weight with the first user is less than a preset value as the second user.

In some embodiments, the attributes of goods comprise at least one of volume, weight, or value of goods.

Fig. 5 shows another embodiment of an information processing device according to other embodiments of the present disclosure.

Fig. 5 shows a structural diagram of an information processing device according to other embodiments of the present disclosure. As shown in Fig. 5, the information processing device 50 of this embodiment comprises an associated user determination module 410, a reconsignment information generation module 420, a distribution information generation module 430, and a state changing module 440.

In some embodiments, the information processing device 40 further comprises: a weight updating module 450 for updating a weight of an edge between the first user and the second user in the graph after acquiring the confirmation of the completion of reconsignment sent by the second user.

In some embodiments, the graph is stored in a graph database.

In some embodiments, the information processing device 40 further comprises: a data storage module 460 for storing the distribution task information of the first user and the confirmation of the completion of reconsignment in a blockchain.

In some embodiments, the information processing device 40 further comprises: a communication module 470 for sending an identifier corresponding to the reconsignment information of the first user to a terminal of the distributor; and receiving a confirmation of the reconsignment information of the first user sent by a terminal of the first user in the case that the first user acquires the identifier corresponding to the reconsignment information of the first user using the terminal of the first user.

In some embodiments, the information processing device 40 further comprises: a communication module 470 for sending an identifier corresponding to the distribution task information of the first user to a terminal of the first user; and receiving the confirmation of the completion of reconsignment sent by a terminal of the second user after the identifier corresponding to the distribution task information is acquired by the terminal of the second user.

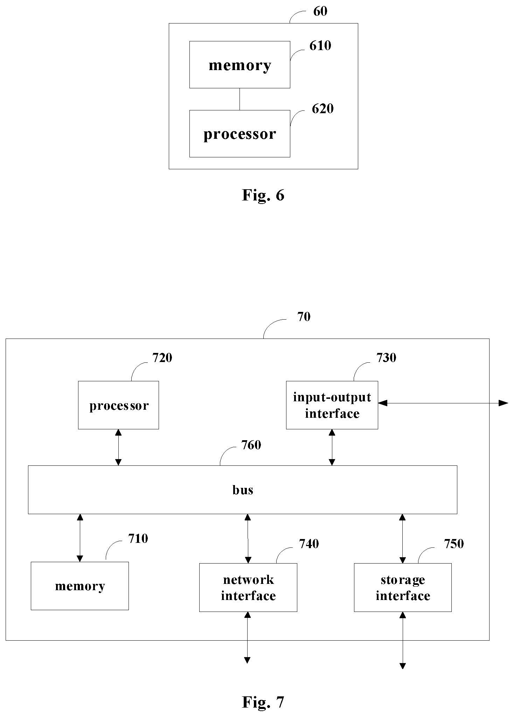

Fig. 6 shows a structural diagram of an information processing device according to still other embodiments of the present disclosure. As shown in Fig. 6, the data processing device 60 of this embodiment comprises: a memory 610 and a processor 620 coupled to the memory 610, the processor 620 configured to, based on instructions stored in the memory 610, carry out the information processing method according to any one of the foregoing embodiments.

The memory 610 may comprise, for example, system memory, a fixed non-volatile storage medium, or the like. The system memory stores, for example, an operating system, application programs, a boot loader (Boot Loader), and other programs.

Fig. 7 shows a structural diagram of an information processing device according to still other embodiments of the present disclosure. As shown in Fig. 7, the data processing device 70 of this embodiment comprises: a memory 710 and a processor 720, and may further include an input-output interface 730, a network interface 740, a storage interface 750, and the like. These interfaces 730, 740, 750 and the memory 710 and the processor 720 may be connected to each other through a bus 770, for example. Wherein, the input-output interface 730 provides a connection interface for input-output devices such as a display, a mouse, a keyboard, and a touch screen. The network interface 740 provides a connection interface for various networked devices. The storage interface 750 provides a connection interface for external storage devices such as an SD card and a USB flash disk.

An embodiment of the present disclosure further provides a computer-readable storage medium on which a computer program is stored, characterized in that the program when executed by a processor implements any one of the foregoing information processing methods.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical memory, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable memory device capable of directing a computer or other programmable data processing apparatus to operate in a specific manner such that the instructions stored in the computer readable memory device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this disclosure, and is not limitation to this disclosure. Within spirit and principles of this disclosure, any modification, replacement, improvement and etc. shall be contained in the protection scope of this disclosure.

## Claims

1. An information processing method, comprising:
determining a second user associated with a first user from users corresponding to distribution tasks of a distributor, wherein a state of goods of the second user is Shipped;
generating reconsignment information to be provided to the first user, wherein the reconsignment information comprises information of the first user and goods information of the second user;
generating distribution task information to be provided to the first user in response to the first user acquiring the reconsignment information and sending a confirmation of the reconsignment information; and
changing the state of goods of the second user in the distribution task of the distributor to Delivered after acquiring a confirmation of completion of reconsignment sent by the second user.

2. The information processing method according to claim 1, wherein the determining a second user associated with a first user comprises :
determining a receiving user within a preset neighborhood range of the first user as the second user according to an address of the first user and addresses of other users receiving goods to be delivered by the distributor.

3. The information processing method according to claim 1, wherein the determining a second user associated with a first user comprises:
obtaining a graph with users in a set of historical reconsignment users as nodes, wherein there is an edge between two users in the set of historical reconsignment users in case that there is a historical reconsignment event occurred between the two users, and a weight is determined for the edge according to attributes of goods corresponding to the historical reconsignment event;
obtaining, from the graph, weights between the first user and various receiving users of goods to be delivered by the distributor; and
determining a receiving user, of which weight with the first user is less than a preset value as the second user.

4. The information processing method according to claim 3, wherein the attributes of goods comprise at least one of volume, weight, or value of goods.

5. The information processing method according to claim 3, further comprising:
updating a weight of an edge between the first user and the second user in the graph after acquiring the confirmation of the completion of reconsignment sent by the second user.

6. The information processing method according to claim 3, wherein the graph is stored in a graph database.

7. The information processing method according to claim 1, further comprising:
storing the distribution task information of the first user and the confirmation of the completion of reconsignment in a blockchain.

8. The information processing method according to claim 1, further comprising:
sending an identifier corresponding to the reconsignment information of the first user to a terminal of the distributor; and
receiving a confirmation of the reconsignment information of the first user sent by a terminal of the first user in the case that the first user acquires the identifier corresponding to the reconsignment information of the first user using the terminal of the first user.

9. The information processing method according to claim 1, further comprising:
sending an identifier corresponding to the distribution task information of the first user to a terminal of the first user; and
receiving the confirmation of the completion of reconsignment sent by a terminal of the second user after the identifier corresponding to the distribution task information is acquired by the terminal of the second user.

10. An information processing device, comprising:
an associated user determination module configured to determine a second user associated with a first user from users corresponding to distribution tasks of a distributor, wherein a state of goods of the second user is Shipped;
a reconsignment information generation module configured to generate reconsignment information to be provided to the first user, wherein the reconsignment information comprises information of the first user and goods information of the second user;
a distribution information generation module configured to generate distribution task information to be provided to the first user in response to the first user acquiring the reconsignment information and sending a confirmation of the reconsignment information; and
a state changing module configured to change the state of goods of the second user in the distribution task of the distributor to Delivered after acquiring a confirmation of completion of reconsignment sent by the second user.

11. An information processing device, comprising:
a memory; and
a processor coupled to the memory, the processor configured to, based on instructions stored in the memory, carry out the information processing method according to any one of claims 1 to 9.

12. A non-transitory computer-readable storage medium on which a computer program is stored, which when executed by a processor implements the information processing method according to any one of claims 1 to 9.
